# EUROPÄISCHE PATENTSCHRIFT

(11) **EP 3 097 628 B1**
(45) Veröffentlichungstag und Bekanntmachung des Hinweises auf die Patenterteilung: **04.05.2022**
(21) Anmeldenummer: 14784493.0
(22) Anmeldetag: 17.10.2014
(51) Int. Cl.: H02K 1/27, H02K 1/28

(54) **PERMANENTMAGNETELEMENT UND ROTOR MIT EINEM SOLCHEN**
PERMANENT MAGNET ELEMENT AND A ROTOR COMPRISING SAME
ÉLÉMENT MAGNÉTIQUE PERMANENT ET ROTOR ÉQUIPÉ D'UN TEL ÉLÉMENT

(30) Priorität: 22.01.2014 DE 102014201152
(43) Veröffentlichungstag der Anmeldung: 30.11.2016
(73) Patentinhaber: Volkswagen Aktiengesellschaft, 38440 Wolfsburg (DE)
(72) Erfinder: BÖHM, Tobias, 38458 Velpke (DE); PLIKAT, Robert, 29369 Ummern (DE); WETZEL, Hermann, 38448 Wolfsburg (DE); MADAUSS, Felix, 38448 Wolfsburg (DE); GRÖNING, Ingolf, 97980 Bad Mergentheim (DE); DEMPEWOLF, Kay-Horst, 97082 Würzburg (DE); WEIGEL, Wolfgang, 97999 Igersheim (DE)
(86) Internationale Anmeldenummer: PCT/EP2014/072352
(87) Internationale Veröffentlichungsnummer: WO 2015/110188

(56) Entgegenhaltungen:
- EP-A2- 1 737 105
- WO-A1-2007/074036
- DE-T2- 69 216 587

## Beschreibung

Die Erfindung betrifft einen Rotor mit einem solchen zum Einsatz in Drehfeldmaschinen, insbesondere Permanentmagnetsynchronmaschinen (PMSM).

Drehfeldmaschinen und insbesondere Synchronelektromaschinen sind ständig wachsenden Anforderungen ausgesetzt. Gefordert sind hohe Drehzahlen und hohe Leistungsdichten (hohe Leistung bei geringem Bauvolumen). Um diesen Anforderungen gerecht zu werden sind moderne Synchronelektromaschinen mit Permanentmagnetläufern (Rotoren) ausgestattet. Dabei sind Permanentmagnete an der Oberfläche des Rotorrückschlusses angeordnet oder in diesen eingebettet ("vergraben").

Im Gegensatz zu Maschinen mit Schleifringläufern, bei denen magnetische Erregung elektrisch erzeugt wird, sind Permanentmagnetläufer weitgehend verschleißfrei zu betreiben.

Bei Permanentmagnetläufern mit vergrabenen Magneten sind diese bei der Herstellung und im Betrieb durch den Rotorkörper gut geschützt. Das Flusspotential des Magnetmaterials wird bei dieser Anordnung jedoch nicht vollständig ausgenutzt, da der wirksame Luftspalt durch die Einbettung in den Rotorkörper vergrößert ist und im Kantenbereich, insbesondere zwischen benachbarten Polenden, magnetische Kurzschlüsse auftreten können, die den Fluss im Luftspalt weiter reduzieren können.

Oberflächenmagneten, die an der Oberfläche des Rotors angeordnet sind, nutzen das Flusspotential des verwendeten Magnetmaterials besser aus. Dazu werden die Oberflächenmagnete auf die im Wesentlichen zylindrische Umfangsfläche des Rotors aufgesetzt bzw. teilweise in die Oberfläche versenkt und dort fixiert (vgl. US 2006/0097595 A1).

Zur Fixierung werden die Permanentmagnetelemente mittels Bandagen auf den Rotor gespannt oder mit geeigneten Klebern dauerhaft fixiert. Es gibt auch Lösungen, bei denen die Permanentmagnetelemente axial in die Nuten eingeschoben oder radial in Schwalbenschwanznuten eingesetzt werden und dort zusätzlich verklebt bzw. vergossen werden (vgl. DE 692 16 587 T2)). Das Klebermaterial in den Fugen der Schwalbenschwanzflanken bildet eine formschlüssige Verbindung, das Material zwischen der Oberfläche des Rotors und der Rückseite der ein-/aufgeklebten Permanentmagnetelemente bildet eine stoffschlüssige Verbindung. Mit solchen Oberflächenmagneten sind sehr hohe Flussdichten bei einem engen Luftspalt zwischen Rotor- und Statorfläche zu erreichen, und das vorhandene Magnetmaterial kann sehr gut ausgenutzt werden.

Die typischen Werkstoffe für solche Permanentmagnete sind heutzutage sogenannte seltene Erdenmagnete, z.B. aus Samarium-Kobalt (SmCo) und Neodyn-Eisen-Bor (NdFeB). Sie werden pulvermetallurgisch hergestellt. Aus gesinterten Rohblöcken werden die entsprechenden Magnetsegmente drahterodiert und dann bis zur Sättigung aufmagnetisiert. Sie weisen sehr hohe Remanenzflussdichten und hohe Koerzitivfeldstärken auf. Solche Permanentmagnetelemente aus Sinterwerkstoffen sind jedoch vergleichsweise spröde und stoßempfindlich.

In hochdrehenden Drehfeldmaschinen treten hohe Fliehkräfte auf, die bei zu dünnen Permanentmagnetelementen zu Verformungen oder Positionsveränderungen führen können. Um diese Effekte zu vermeiden, müssen die Permanentmagnetelemente stärker ausgebildet werden, was wiederum deren Gewicht erhöht und damit auch die Anforderungen an die Haltemittel (Verklebungen, Aufnahmeelemente am Rotor, Stabilität des Rotors). Der dickenbedingte erhöhte magnetische Fluss im Permanentmagnetelement selbst erhöht auch den erforderlichen Materialeinsatz im Stator und Rotor, da für den vollständigen magnetischen Rückfluss mehr magnetisch leitendes Material (höhere Wandstärken) erforderlich ist. Damit werden solche Maschinen schwerer und die Anforderungen an die Lagerungen und die Fertigungsgenauigkeit steigen.

Im Dokument WO 2007/0740 A1 wird ein Elektromotor beschrieben. Der Elektromotor weist schalenförmige Permanentmagnetelemente auf der Oberfläche seines Rotors auf, welche mittels radial aus der Oberfläche herausragenden Halteelementen an der Oberfläche aufgenommen sind, wobei jeweils ein Vorsprung eines Halteelements in eine Vertiefung in eiem Permanentmagnetelement formschlüssig eingreift.

Das Dokument EP 1 737 105 A2 zeigt einen Rotor eines Elektromotors mit einem Rotorkern und einen zylinderförmigen Magnetmantel. Der Magnetmantel kann eine einteilige Hülse sein oder aus mehreren Schalenstücken bestehen. Der Magnetmantel wird mittels in den Magnetmantel eingreifenden Haltelementen mit radialen Hinterschneidungen formschlüssig auf der Oberfläche des Rotorkerns aufgenommen.

Aufgabe der vorliegenden Erfindung ist es, ein Permanentmagnetelement bereitzustellen, mit dem die oben genannten Nachteile bekannter Synchronmaschinen mit Oberflächenmagneten wenigstens teilweise überwunden werden. Insbesondere besteht auch die Aufgabe, die Fixierung der Permanentmagnetelemente am Rotor zu verbessern und einen verbesserten Rotor bereitzustellen.

Diese Aufgabe wird durch den erfindungsgemäßen Rotor nach Anspruch 1 gelöst.

Weitere vorteilhafte Ausgestaltungen der Erfindung ergeben sich aus den Unteransprüchen und der Beschreibung bevorzugter Ausführungsbeispiele der vorliegenden Erfindung.

Ein Permanentmagnetelement in einem erfindungsgemäßen Rotor für eine Synchronelektromaschine umfasst zwei von einem Magnetfeld senkrecht durchsetzte Wirkflächen, deren erste zur Anlage an einer Umfangsfläche eines Rotors (Innen- oder Außenläufer) einer Elektromaschine ausgebildet ist und deren zweite als Radialfläche für einen Ringspalt (Luftspalt) zwischen dem Rotor und einem Stator ausgebildet ist. So ein Permanentmagnetelement kann typischerweise einen rechteckigen Umriss haben und ist etwa platten- oder schalenförmig ausgebildet.

Die erste und zweite Wirkfläche verlaufen dabei weitgehend parallel zueinander und sind in der Regel - der Rotorfläche folgend - zylindrisch gekrümmt. Es gibt auch Ausführungen, bei denen die Elemente plattenförmig ausgebildet und erste und/oder die zweite Wirkfläche eben ausgebildet sind. Die zylindrische Rotorgestalt ist dann durch eine mehrkantig, prismatische Gestalt angenähert, die aus mehreren, zueinander geneigten, rechteckigen, ebenen Flächen gebildet wird.

Die erste und zweite Wirkfläche sind über eine Stegfläche miteinander verbunden, die als mit einer Nut versehenes Tragprofil ausgebildet ist, das für einen in radialer Richtung wirkenden Formschluss mit einem am Rotor angeordneten Halteelement ausgebildet ist. Auf diese Weise ist es möglich, zwei auf dem Rotor in Umfangsrichtung benachbarte Permanentmagnetelemente an der Stegfläche über ein einziges Halteelement zu fixieren, das in Umfangsrichtung in die Tragprofile der Permanentmagnetelemente eingreift. An den ersten Wirkflächen (rotornahe Kontaktflächen) der Permanentmagnetelemente sind keine aufwändig herzustellenden Ausnehmungen oder Profile erforderlich, die einen Querschnitt mit Hinterschneidungen aufweisen - wie etwa Schwalbenschwanz- oder T-Nuten.

Bei einer Ausführung ist das Tragprofil so ausgebildet, dass ein erster Randbereich, der die erste (rotornahe) Wirkfläche mit der Nut verbindet, quer zum Nutverlauf (Längsrichtung der Nut) hinter einen zweiten (rotorfernen) Randbereich zurückspringt, der die zweite Wirkfläche (Radialfläche des Luft- oder Ringspalts) mit der Nut verbindet. Damit ist der Abstand bei zwei entlang ihrer Stegflächen (in Umfangsrichtung) nebeneinander angeordneten Permanentmagnetelementen zwischen den ersten beiden (rotornahen) Randbereichen größer als der zwischen den beiden (rotorfernen) zweiten Randbereichen. Die zweiten Randbereiche können dabei auch unmittelbar aneinander angrenzen, sodass eine geschlossene Radialfläche ausgebildet werden kann, welche eine weitgehend geschlossene Polfläche eines aus mehreren Permanentmagnetelementen gebildeten Magnetpols bildet.

Über gekrümmt oder eben gestaltete Flanken, lassen sich die Eigenschaften der Verbindung der Permanentmagnetelemente mit dem Rotor an die Anforderungen bezüglich Stabilität und magnetischer Eigenschaften anpassen.

Bei einer Ausführung ist der erste Randbereich in radialer Richtung länger als der zweite Randbereich. Damit ist der rotornahe Steg zwischen der Nutflanke und der ersten Wirkfläche vergleichsweise dick ausgebildet, sodass auch höhere Radialkräfte keine Verformung des Permanentmagnetelementes hervorrufen.

Es gibt auch Ausführungen bei welchen der zweite Randbereich in radialer Richtung länger ist als der erste Randbereich. So eine Gestaltung kann hilfreich sein, um den Magnetfluss durch die zweite Wirkfläche in den Ringspalt auch im Grenzbereich benachbarter Permanentmagnetelemente zu homogenisieren, da die magnetisch wirksame Wanddicke (äußerer Steg zwischen Nutflanke und zweiter Wirkfläche) relativ stark ausgebildet ist.

Ein erfindungsgemäßer Rotor für eine Synchronelektromaschine mit mehreren Magnetpolen, die jeweils mehrere Permanentmagnetelemente mit Merkmalen gemäß der oberen Darstellung aufweisen, weist Halteelemente auf, deren Außenkontur formschlüssig in die Tragprofile benachbarter Permanentmagnetelemente eines Magnetpols eingreift. Mit solchen Halteelementen lassen sich Oberflächenmagnetpole aus mehreren Permanentmagnetelementen aufbauen und auf einfache Weise zuverlässig formschlüssig am Rotor fixieren und ausrichten.

Die Halteelemente lassen sich entsprechend der erforderlichen oder gewünschten Größe der Permanentmagnetelemente in Umfangs- und/oder Längsrichtung an der Rotoroberfläche anordnen und verteilen.

Es gibt Ausführungen, bei denen die Halteelemente als bzw. mit Köpfen ausgebildet sind, die in die Tragprofile eingreifen. Es gibt komplementär zum Tragprofil ausgebildete Konturen, sodass der Kopf entlang seiner Außenkontur am Tragprofil anliegt, oder solche Konturen, die nur punktweise am Tragprofil und insbesondere an den Nutflanken des Tragprofils angreifen (z.B. ein Kugelkopf, der in eine trapezförmig-prismatischen Nut eingreift). Solche Halteelemente können ohne weiteres an oder im Rotor nach dessen Herstellung fixiert werden (z.B. durch Schraub- oder Nietverbindungen und andere geeignete Fügeverfahren).

Bei einer Ausführung, bei welcher die Halteelemente als in die Tragprofile eingreifende Halteleisten gestaltet sind, lässt sich eine besonders tragfähige, gleichmäßige und genaue Kopplung zwischen Permanentmagnetelement und Rotor realisieren, da die wirkenden Kräfte über die gesamte Länge der Halteleisten bzw. Tragprofile übertragen werden können.

Solche Tragprofile können einstückig am bzw. mit dem Rotor ausgebildet sein. Sie können auch ohne große Schwierigkeiten aus auf dem Rotor angeordneten Lamellenpaketen (jeweils aus den einzelnen Lamellen) herausgestanzt oder in diese eingefräst werden. Durch die einstückige Ausführung, die in den Rotorkörper integriert ist, lassen sich hohe Radialkräfte zwischen Permanentmagnetelement und Halteelement übertragen.

Sind die Halteleisten schraubenförmig um den Rotorkörper angeordnet, so lassen sich damit auch die Permanentmagnetelemente eines Pols schraubenförmig anordnen. So eine schraubenförmige Anordnung kann vorteilhaft für die Laufeigenschaften des Motors sein und die Stabilität weiter erhöhen.

Ein Synchronmotor, der mit einem erfindungsgemäßen Rotor ausgestattet ist, erlaubt die Verwendung von Oberflächenmagneten, die relativ dünn ausgebildet sind und damit auch einen entsprechend dünnwandigen und leichten Rotorrückschluss erfordern, sodass der Rotor insgesamt vergleichsweise leicht ausgebildet wird und so eine hohe Leistungsdichte gestattet.

Eine Antriebseinheit mit einem solchen Synchronelektromotor lässt sich insbesondere als Fahrantrieb in Kraftfahrzeugen (Elektro- oder Hybridfahrzeuge) einsetzen.

Weitere vorteilhafte Ausgestaltungen der Erfindung ergeben sich aus den Unteransprüchen und der folgenden Beschreibung bevorzugter Ausführungsbeispiele der vorliegenden Erfindung. Ausführungsbeispiele der Erfindung werden nun beispielhaft unter Bezugnahme auf die beigefügten Zeichnungen beschrieben. Darin zeigt
- Fig. 1: einen schematischen Querschnitt durch einen Rotor mit Oberflächenmagneten und einen vergrößert dargestellten abgewickelten Bereich mit erfindungsgemäßen Permanentmagnetelementen;
- Fig. 2: einen Ausschnitt aus Fig. 1 mit einem ersten Ausführungsbeispiel erfindungsgemäßer Permanentmagnetelemente mit Halteelement und Rotor;
- Fig. 3: einen Ausschnitt aus Fig. 1 mit einem zweiten Ausführungsbeispiel erfindungsgemäßer Permanentmagnetelemente mit Halteelement und Rotor;
- Fig. 4: einen Ausschnitt aus Fig. 1 mit einem dritten Ausführungsbeispiel erfindungsgemäßer Permanentmagnetelemente mit Halteelement und Rotor;
- Fig. 5: einen Ausschnitt aus Fig. 1 mit einem vierten Ausführungsbeispiel erfindungsgemäßer Permanentmagnetelemente mit Halteelement und Rotor;
- Fig. 6: einen Ausschnitt aus Fig. 1 mit einem fünften Ausführungsbeispiel erfindungsgemäßer Permanentmagnetelemente mit Halteelement und Rotor;
- Fig. 7: einen Ausschnitt aus Fig. 1 mit einem sechsten Ausführungsbeispiel erfindungsgemäßer Permanentmagnetelemente mit Halteelement und Rotor;
- Fig. 8: einen Ausschnitt aus Fig. 1 mit einem siebten Ausführungsbeispiel erfindungsgemäßer Permanentmagnetelemente mit Halteelement und Rotor; und
- Fig. 9: eine schematische Darstellung eines erfindungsgemäßen Rotors auf dem mehrere erfindungsgemäße Permanentmagnetelemente schraubenförmig angeordnet sind.

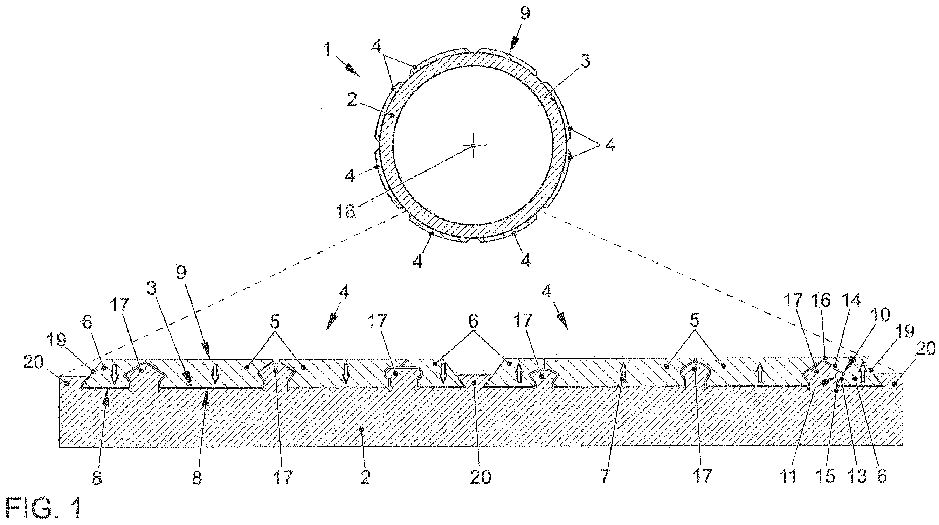

Fig. 1 zeigt im Querschnitt die schematische Darstellung eines Rotors 1 mit einem zylinderrohrförmigen Rotorrückschluss 2 an dessen Außenoberfläche 3 mehrere Magnetpole 4 mit abwechselnd entgegengesetzter Polarisierung angeordnet sind.

In der darunter angeordneten Darstellung ist der durch die beiden gestrichelten Linien begrenzte Sektor des Rotors 1 abgewickelt. Die beiden benachbarten Pole 4 werden aus mehreren Permanentmagnetelementen 5, 6 gebildet. In der dargestellten Ausführung wird jeder Magnetpol 4 aus zwei Randelementen 6 und zwei Flächenelementen 5 gebildet. Alle Permanentmagnetelemente 5, 6 eines Pols 4 weisen die gleiche magnetische Orientierung auf - gekennzeichnet durch die Pfeile 7, die die magnetische Flussrichtung angeben. Die Flussrichtung benachbarter Pole ist dabei entgegengesetzt.

Die Permanentmagnetelemente 5, 6 sind formschlüssig an der Außenoberfläche 3 des Rotorrückschlusses 2 angeordnet. Dabei liegen die Permanentmagnetelemente 5, 6 mit einer ersten rotorseitigen Wirkfläche 8 an der Außenoberfläche 3 des Rotorrückschlusses an. Die zweite (luftspaltseitige) Wirkfläche 9 bildet die äußere Radialfläche des Rotors 1, die den Ringspalt zwischen einem den Rotor 1 umgebenden Stator (nicht dargestellt) radial nach innen definiert. Die Permanentmagnetelemente 5, 6 sind als plattenförmige Elemente ausgebildet, deren Dicke die Magnetfeldstärke in Abhängigkeit vom verwendeten Magnetmaterial bestimmt.

Sie sind z.B. aus gesinterten Pulverlegierungen hergestellt (z.B. SmCo und NdFeB Werkstoffen, die etwa 26% Samarium, 50% Kobalt und 16% Eisen mit einigen Prozent Kupfer und Zirkonium enthalten bzw. etwa 23% Neodym, 68% Eisen, 1% Bor und 8% Dysprosium). Die Permanentmagnetelemente 5, 6 können zum Korrosionsschutz und/oder zur Vermeidung magnetischer Kurzschlüsse untereinander mit Beschichtungen wie Nickel, Zinn oder Epoxyharz versehen sein. Leistungsfähige Seltene-Erden-Magnetwerkstoffe weisen Koerzitivfeldstärken von über 2000 kA/m auf und maximale Remanenzen von 1 bis 1,3 T. Andere grundsätzlich verwendbare Werkstoffe sind z.B. auch Aluminium-Nickel-Kobalt-Legierungen sowie Hartferrit-Werkstoffe.

Zur Fixierung weisen die Permanentmagnetelemente 5, 6 zwischen der ersten und zweiten Wirkfläche 8, 9 ein Tragprofil 10 auf, welches mit einer Nut 11 versehen ist, die sich in Umfangsrichtung (entlang der Außenoberfläche 3) in das Permanentmagnetelement 5, 6 hinein erstreckt. Die beiden Nutflanken 13, 14 gehen in Randbereiche 15, 16 über, welche die Nut 11 mit der ersten und zweiten Wirkfläche 8, 9 verbinden. Dabei springt der erste Randbereich 15 in Umfangsrichtung gesehen hinter den zweiten Randbereich 16 zurück, sodass die Randbereiche 16 benachbarter Permanentmagnetelemente 5, 6näher aneinander liegen als die zweiten Randbereiche 15.

Zur Fixierung zweier nebeneinanderliegender Permanentmagnetelemente 5, 6sind Halteelemente 17 vorgesehen, welche entsprechend dem Tragprofil 10 bzw. der Nut 11 ausgebildet sind und vom Rotorrückschluss 2 ausgehend die erste Nutflanke 13 hinterstellen, sodass diese durch das Halteelement 17 in radialer Richtung relativ zu einer Hauptachse 18 des Rotors 1 gehalten wird.

Die Flächenelemente 5 weisen jeweils an ihren in Umfangsrichtung des Rotors 1 weisenden Rändern entsprechende Tragprofile 10 mit Nuten 11 auf. Die Randelemente 6 weisen nur an ihrem polseitigen, den Flächenelementen 5 zugewandten Rändern ein solches Tragprofil 10 mit Nut 11 auf. Am in Umfangsrichtung liegenden Außenrand des Pols 4 ist eine keilförmige Randfläche 19 vorgesehen ist, die ein schwalbenschwanzartiges Halteprofil 20 unterstellt, das am Rückschluss 2 ausgebildet ist.

Damit werden alle Permanentmagnetelemente 5, 6 formschlüssig am Rotor 1 fixiert, nämlich über die Halteelemente 17 bzw. über die Halteelemente 17 und die Halteprofile 20.

Die Abstände in Umfangsrichtung zwischen den Halteelementen 17 bzw. den Halteprofilen 20 und den Halteelementen 17 können entsprechend der Baugröße und anderen Motorkenngrößen (Drehzahl, Durchmesser, Drehmoment) gewählt werden, sodass die Dimensionen der Permanentmagnetelemente 5, 6 und die Dimensionen des Rotorrückschlusses 2 optimal hinsichtlich der geforderten Festigkeiten und elektromagnetischen Wirkungen gewählt werden können.

Es können so beispielsweise relativ viele dünne (in Radialrichtung) Permanentmagnetelemente 5, 6 nebeneinander zu größeren Polflächen kombiniert werden, ohne dass die Gefahr besteht, dass sie sich unter Wirkung der auftretenden Zentrifugalkräfte bei hohen Umfangsgeschwindigkeiten aus ihrer Verankerung lösen (herauswölben). Dies erlaubt dann auch entsprechend dünne und damit leichte Rückschlusskörper am Rotor 1, da die Eindringtiefe der magnetischen Feldlinien relativ gering gehalten werden kann.

Halteelemente 17 und Halteprofile 20 können einstückig im Rotorrückschluss 2 ausgebildet sein, sie können aber auch in entsprechende einheitliche Aufnahmenuten im Rotorrückschluss 2 eingeschoben werden.

Es ist auch möglich mehrere Permanentmagnetelemente 5, 6 in Axialrichtung gesehen hintereinander auf dem Rotor 1 anzuordnen. Bei einem geblechten Rotor 1 bzw. Rotorrückschluss 2, bei dem zur Verbesserung der Flusseigenschaften mehrere in Axialrichtung hintereinander angeordnete und voneinander isolierte Lamellen vorgesehen sind, können die Halteelemente 17 und Halteprofile 20 auch in die einzelnen Lamellenbleche hineingestanzt werden.

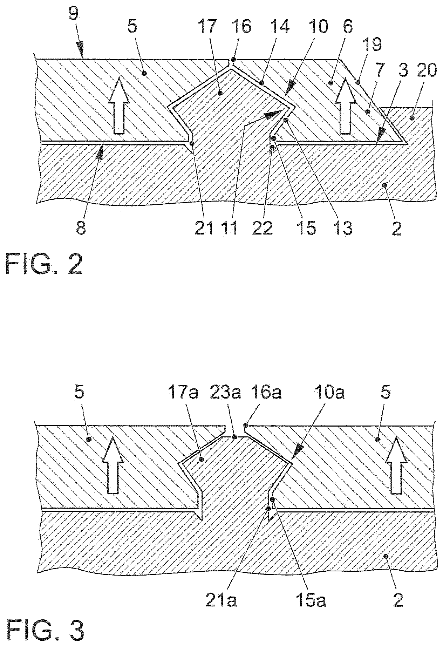

Die nachfolgenden Figuren 2 bis 8 zeigen unterschiedliche Ausführungsbeispiele von Permanentmagnetelementen 5, 6, die mit unterschiedlichen Tragprofilen 10 versehen sind, in die entsprechende Halteelemente 17 eingreifen.

Die in Fig. 2 dargestellten Permanentmagnetelemente 5, 6 (erstes Ausführungsbeispiel) weisen ein Tragprofil 10 mit einer Nut 11 auf, deren ebene Flanken 13 und 14 geneigt verlaufen und in vergleichsweise schmale bzw. spitze Randbereiche 15 und 16 münden. Dabei stoßen die beiden Randbereiche 16 der benachbarten Elemente 5, 6 fast aneinander.

Das entsprechende Halteelement 17 hat flächigen Kontakt mit den Nutflanken 13 und 14 und geht über einen Hals 21 in den Rotorrückschluss 2 über, wobei zwischen dem Halsansatz und der Außenoberfläche 3 eine radial in den Rotor abgesenkte Entlastungs-/Montagenut 22 vorgesehen ist, die zum einen auftretende Kerbspannungsspitzen verringert und die Montage durch Aufschieben in Längsrichtung (senkrecht zur Papierebene) auf die Halteelemente 17 erleichtert.

Fig. 3 zeigt eine Variante (zweites Ausführungsbeispiel), bei der der rotorseitige erste Randbereich 15a in radialer Richtung länger ausgebildet ist und so das Tragprofil 10a rotorseitig stabilisiert. Die stumpfe rotorseitige Kante des ersten Randbereichs 15a verringert auch die Gefahr von Beschädigungen beim Einschieben der Permanentmagnetelemente 5, 6 und erlaubt gegebenenfalls höhere Zentrifugalkräfte radial nach außen. Die Länge des Halses 21a ist an den verlängerten ersten Randbereich 15a angepasst. Zusätzlich ist das Halteelement 17a am oberen Ende mit einer Abflachung 23a versehen, die teilweise von den zweiten Randbereichen 16a der benachbarten Permanentmagnetelemente 5 überdacht werden.

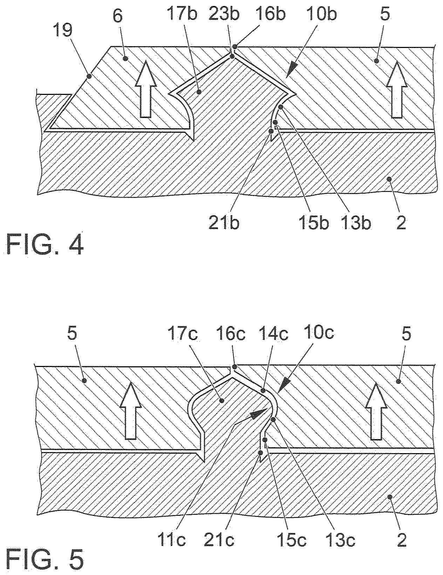

Fig. 4 zeigt eine funktional ähnliche Ausführung 2 (drittes Ausführungsbeispiel). Hier ist jedoch die erste Nutflanke 13b konvex gekrümmt ausgebildet, sodass sie ausgehend vom Nutgrund in Umfangsrichtung glatt in den ersten Randbereich 15b übergeht. In ähnlicher Weise geht das dem Randbereich 15b bzw. der ersten Nutflanke 13b entsprechende Stützprofil des Halteelements 17b glatt in den Hals 21b über. Der Kopf des Halteelements 17b läuft nach oben spitz zu und an dessen Scheitel bzw. Spitze 23b laufen die zweiten Randbereiche 16b nah zusammen.

Fig. 5 zeigt eine konkav ausgerundete Nut 11c, deren Nutflanken 13c und 14c gerundet glatt ineinander übergehen (viertes Ausführungsbeispiel). Auch hier ist ein verlängerter (radial verstärkter) erster Randbereich 15c vorgesehen. Gleichzeitig ist auch der Randbereich 16c etwas verlängert, wodurch die magnetische Wirkung im Bereich der aneinanderstoßenden Permanentmagnetelemente 5, 6 verstärkt sein dürfte. Damit ist über die gesamte Wirkfläche der Magnetpole 4 der magnetische Fluss homogenisiert. Das entsprechende Halteelement 17c weist ein zwiebelturmartiges Profil auf, welches dem Tragprofil 10c entspricht.

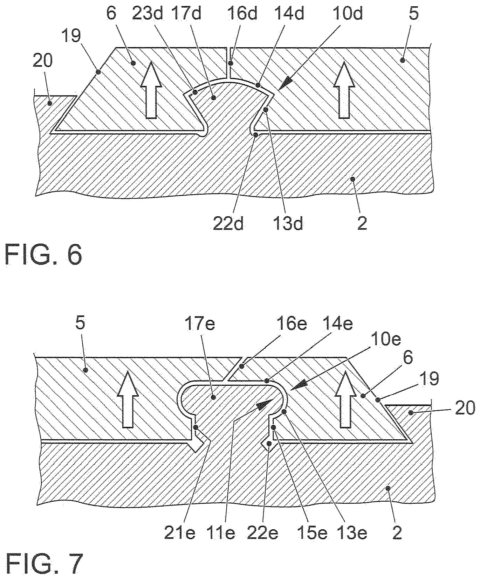

Fig. 6 zeigt ein Tragprofil 10d (fünftes Ausführungsbeispiel), bei dem die erste Nutflanke 13d als gerade Fläche ausgebildet ist, die im Nutgrund spitz auf eine konkav gekrümmte zweite Nutfläche 14d trifft. Hier ist ebenfalls der zweite Randbereich 16d in radialer Richtung stark verlängert, sodass über dem bogenförmig verlaufenden Scheitel 23d des Halteelements 17d eine relativ dicke (starke und weitgehend geschlossene) Magnetpolzone angeordnet ist. Der Kopf ist über eine ausgerundete Entlastungskerbe 22d am Rotorrückschluss 2 angeschlossen.

Fig. 7 zeigt ein Halteprofil 10 (sechstes Ausführungsbeispiel), bei dem eine gerundete Nut 11e in den Permanentmagnetelementen 5, 6 angeordnet ist, die in einen verlängerten ersten Randbereich 15e übergeht, der radial zwischen der ersten Nutflanke 13e in die erste Wirkfläche 8 übergeht. Der zweite Randbereich 16e verläuft von der zweiten Nutflanke 14e ausgehend schräg radial und in Umfangsrichtung nach außen. Die zweiten Randbereiche 16e der benachbarten Permanentmagnetelemente 5, 6 sind dabei komplementär ausgebildet, sodass sie einander schuppenartig überlappen. Bei dieser Anordnung findet eine magnetische Kopplung benachbarter gleichgepolter Permanentmagnetelemente 5, 6 statt, bei der im Überlappbereich gleiche magnetische Feldlinien beide Permanentmagnetelemente 5, 6 durchsetzen. Das Halteelement 17e hat einen pilzförmig abgeflachten Kopf der komplementär zum Tragprofil 10e ausgebildet ist und über den Hals 21e und eine Rechteckkerbe 22e mit dem Rückschluss 2 verbunden ist.

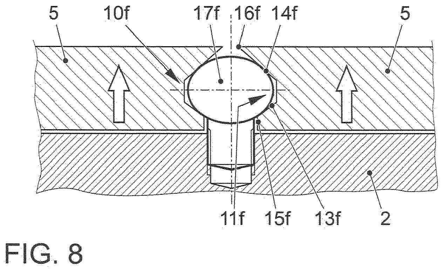

Fig. 8 zeigt ein Tragprofil 10f (siebtes Ausführungsbeispiel) mit einer trapezförmig ausgebildeten Nut 11f deren erste Nutflanke 13f in einen verlängerten ersten Randbereich 15f übergeht (erhöhte Stabilität) und deren zweiter Randbereich 14f in einen spitz zulaufenden zweiten Randbereich 16f übergeht.

Das Halteelement 17f ist hier als in den Rotorrückschluss eingeschraubtes Einzelelement mit einem (hier abgeflacht dargestellten) Kugelkopf ausgebildet, der punktweise an den Flanken 13f, 14f der Nut 11f angreift und so die Permanentmagnetelemente 5, 6 radial fixiert. Die Anzahl solcher Halteelemente 17f wird entsprechend der erforderlichen Haltekräfte gewählt, die erforderlich sind, um die Permanentmagnetelemente stabil und genau am Rotor 1 zu fixieren. In einer alternativen Ausführung kann auch ein als Leiste ausgebildetes Halteelement 17 mit einem runden Kopfprofil (zylindrisch) versehen werden, welches in ein mehrkantiges Nutprofil eingreift und dort die Permanentmagnetelemente 5, 6 über eine entsprechende Linienberührung fixiert.

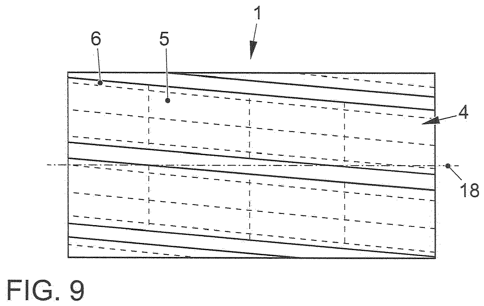

Figur 9 zeigt einen Rotor 1 in einer schematischen Seitenansicht. Bei dieser Ausführung sind die Permanentmagnetelemente 5, 6 nicht nur in Umfangsrichtung geteilt. Die Halteelemente 17 verlaufen hier schraubenförmig entlang der gestrichelt dargestellten Linien, die gleichzeitig die Trennfugen der Permanentmagnetelemente 5, 6 kennzeichnen. Mehrere Permanentmagnetelemente 5, 6 sind auch hintereinander angeordnet. Acht Flächenelemente 5 und acht Randelemente 6 bilden jeweils einen Pol 4. Kleinere kompakte Permanentmagnetelemente 5, 6 sind einfacher herzustellen und auf den Rotor 1 aufzuschieben. Alternativ zu der dargestellten schraubenförmigen Anordnung können die Permanentmagnetelemente 5, 6 auch gerade, also entlang der Achse 18 angeordnet werden.

Es gibt auch Ausführungen, in denen ein Pol 4 lediglich von Randelementen 6 gebildet wird, die an ihren Außenrändern über Halteprofile 20 und an ihren einander zugewandten Rändern über Halteelemente 17 gehalten werden.

Weitere Varianten und Ausführungen der vorliegenden Erfindung ergeben sich für den Fachmann im Rahmen der Ansprüche.

### Bezugszeichenliste

- 1: Rotor
- 2: Rotorrückschluss
- 3: Außenoberfläche
- 4: Magnetpol
- 5: Permanentmagnetelement (Fläche)
- 6: Permanentmagnetelement (Rand)
- 7: Flussrichtung
- 8: erste (rotorseitige) Wirkfläche
- 9: zweite (luftspaltseitige) Wirkfläche
- 10: (10a - f)Tragprofil
- 11: (11a - f) Nut
- 12: --frei--
- 13: (13a - f) erste Nutflanke
- 14: (14a - f) zweite Nutflanke
- 15: (15a - f) erster Randbereich
- 16: (16a - f) zweiter Randbereich
- 17: (17a - f) Halteelement
- 18: Hauptachse
- 19: Randfläche
- 20: Halteprofil
- 21: (21a - f)Hals
- 22: (22a - f) Entlastungskerbe
- 23: (23a - f) Scheitel

## Patentansprüche

1. Rotor (1) für eine Synchronelektromaschine, mit mehreren Magnetpolen (4), einem Rotorrückschluss (2) mit einer Außenoberfläche (3), an welchem mehrere Halteelemente (17) mit einer Außenkontur angeordnet sind, und mehreren Permanentmagnetelementen (5, 6) mit zwei von einem Magnetfeld senkrecht durchsetzten Wirkflächen (8, 9), deren erste Wirkfläche (8) zur Anlage an der Außenoberfläche (3) ausgebildet ist und deren zweite Wirkfläche (9) als Radialfläche für einen Ringspalts zwischen dem Rotor (1) und einem Stator der Synchronelektromaschine ausgebildet ist, wobei eine die erste und zweite Wirkfläche (8, 9) verbindende Stegfläche als mit einer Nut (11) versehenes Tragprofil (10) ausgebildet ist, das für einen in radialer Richtung wirkenden Formschluss mit einem der Halteelemente (17) ausgebildet ist, **dadurch gekennzeichnet, dass** ein Magnetpol (4) aus mehreren Permanentmagnetelemente (5,6) gebildet ist, wobei alle Permanentmagnetelemente (5,6) eines Magnetpols (4) die gleiche magnetische Orientierung in Bezug auf den Rotorrückschluss (2) aufweisen, und dass die Außenkontur der Halteelemente (17) formschlüssig in die Tragprofile (10) benachbarter Permanentmagnetelemente (5, 6) eines Magnetpols (4) eingreifen.

2. Rotor (1) nach Anspruch 1, bei welchem die Nut (11) ebene und/oder gekrümmte Flanken (13, 14) aufweist.

3. Rotor (1) nach Anspruch 1 oder 2, wobei die sich am Rand des Magnetpols (4) befindenden Permanentmagnetelemente (6) am in Umfangsrichtung liegenden Außenrand des Magnetpols (4) eine keilförmige Randfläche (19) aufweisen, die jeweils ein schwalbenschwanzartiges Halteprofil (20) am Rotorrückschluss (2) unterstellt.

4. Rotor (1) nach Anspruch 1 bis 3, wobei die Haltelemente (17) einen flächigen Kontakt mit den Flanken (13, 14) der Nut (11) haben und jeweils einen Hals (21) aufweisen, mit welchem sie in den Rotorrückschluss (2) übergehen, wobei zwischen dem Halsansatz und der Außenoberfläche (3) eine radial in den Rotorrückschluss (2) abgesenkte Entlastungsnut (22) vorgesehen ist.

5. Rotor (1) nach Anspruch 1 bis 4, bei welchem das Tragprofil (10) derart ausgebildet ist, dass ein erster die Nut (11) und die erste Wirkfläche (8) verbindender Randbereich (15) quer zum Nutverlauf hinter einen zweiten die Nut (11) und die zweite Wirkfläche (9) verbindenden Randbereich (16) zurückspringt, so dass der Abstand bei zwei entlang ihren Stegflächen nebeneinander angeordneten Permanentmagnetelementen (5, 6) zwischen den beiden ersten Randbereichen (15) größer ist als der zwischen den beiden zweiten Randbereichen (16).

6. Rotor (1) nach einem der Ansprüche 1bis 5, bei welchem der erste Randbereich (15) in radialer Richtung länger ist als der zweite Randbereich (16).

7. Rotor (1) nach einem der Ansprüche 1 bis 5, bei welchem der zweite Randbereich (16) in radialer Richtung länger ist als der erste Randbereich (15).

8. Rotor (1) nach einem der Ansprüche 1 bis 7, bei welchem die Halteelemente (17) als in die Tragprofile (10) eingreifende, insbesondere einstückig am Rotor (10) ausgebildete, Halteleisten gestaltet sind.

9. Rotor nach einem der Ansprüche 1 bis 8, bei welchem die Halteelemente (17) entlang einer Schraubenlinie um eine Hauptachse (18) des Rotors (10) verlaufen.

10. Synchronelektromotor mit einem Rotor nach einem der Ansprüche 1 bis 9.

11. Fahrzeugantriebseinheit, insbesondere für ein Elektro- und/oder Hybridfahrzeug mit einem Synchronelektromotor nach Anspruch 10.

## Claims

1. Rotor (1) for a synchronous electric machine, having several magnet poles (4), a rotor return (2) having an outer surface (3) on which several retaining elements (17) having an outer contour are arranged, and several permanent magnet elements (5, 6) having two active surfaces (8, 9) which are penetrated perpendicularly by a magnetic field and whose first active surface (8) is formed for placement on the outer surface (3) and whose second active surface (9) is formed as a radial surface for an annular gap between the rotor (1) and a stator of the synchronous electric machine, wherein a web surface connecting the first and second active surfaces (8, 9) is formed as a support profile (10) having a groove (11), which support profile forms a positive fit, acting in the radial direction, with one of the retaining elements (17), **characterized in that** a magnet pole (4) is formed of several permanent magnet elements (5, 6), wherein all permanent magnet elements (5, 6) of a magnet pole (4) have the same magnetic orientation with respect to the rotor return (2), and that the outer contour of the retaining elements (17) engage in the support profiles (10) of adjacent, permanent magnet elements (5, 6) of a magnet pole (4) in a positive fit.

2. Rotor (1) according to claim 1, in which the groove (11) has level and/or curved flanks (13, 14).

3. Rotor (1) according to claim 1 or 2, wherein the permanent magnet elements (6) on the edge of the magnet pole (4) have, at the outer edge, lying in the circumferential direction, of the magnet pole (4), a wedge-shaped edge surface (19) which in each case positions a dovetail-like retaining profile (20) underneath on the rotor return (2).

4. Rotor (1) according to claim 1 through 3, wherein the retaining elements (17) have a flat contact with the flanks (13, 14) of the groove (11) and each have a neck (21) with which they merge into the rotor return (2), wherein a relief groove (22) lowered radially into the rotor return (2) is provided between the start of the neck and the outer surface (3).

5. Rotor (1) according to claim 1 through 4, in which the support profile (10) is designed such that a first edge region (15) which connects the groove (11) to the first active surface (8) jumps back transversely to the course of the groove behind a second edge region (16) which connects the groove (11) to the second active surface (9), so that, in the case of two, permanent magnet elements (5, 6) arranged next to one another along their web surfaces, the distance between the two, first edge regions (15) is greater than that between the two, second edge regions (16).

6. Rotor (1) according to one of claims 1 through 5, in which the first edge region (15) is longer in the radial direction than the second edge region (16).

7. Rotor (1) according to one of claims 1 through 5, in which the second edge region (16) is longer in the radial direction than the first edge region (15).

8. Rotor (1) according to one of claims 1 through 7, in which the retaining elements (17) are designed as retaining strips that engage in the support profiles (10) and are, in particular, formed integrally on the rotor (10).

9. Rotor according to one of claims 1 through 8, in which the retaining elements (17) run along a helical line about a main axis (18) of the rotor (10).

10. Synchronous electric motor having a rotor according to one of claims 1 through 9.

11. Vehicle drive unit - in particular, for an electric and/or hybrid vehicle having a synchronous electric motor according to claim 10.

## Revendications

1. Rotor (1) pour une machine électrique synchrone, comprenant plusieurs pôles magnétiques (4), un étrier de rotor (2) comprenant une surface extérieure (3) sur laquelle sont disposés plusieurs éléments de support (17) comprenant un contour extérieur, et plusieurs éléments magnétiques permanents (5, 6) comprenant deux surfaces actives (8, 9) traversées verticalement par un champ magnétique, dont la première surface active (8) est conçue pour être placée sur la surface extérieure (3) et dont la seconde surface active (9) est conçue comme surface radiale pour une fente annulaire entre le rotor (1) et un stator de la machine électrique synchrone, une surface de traverse reliant les première et seconde surfaces actives (8, 9) est conçue comme un profilé de support (10) muni d'une rainure (11), lequel est conçu pour un engagement positif agissant dans la direction radiale avec un des éléments de support (17), **caractérisé en ce qu'**un pôle magnétique (4) est formé par plusieurs éléments magnétiques permanents (5, 6), tous les éléments magnétiques permanents (5, 6) d'un pôle magnétique (4) présentant la même orientation magnétique par rapport à l'étrier de rotor (2), et **en ce que** les contours extérieurs des éléments de support (17) entrent en prise par engagement positif dans les profilés de support (10) d'éléments magnétiques permanents (5, 6) adjacents d'un pôle magnétique (4).

2. Rotor (1) selon la revendication 1, dans lequel la rainure (11) présente des flancs (13, 14) plans et/ou courbes.

3. Rotor (1) selon la revendication 1 ou 2, les éléments magnétiques permanents (6) situés sur le bords du pôle magnétique (4) présentant sur le bord extérieur du pôle magnétique (4) situé dans la direction circonférentielle une surface de bord (19) en forme de biseau, laquelle place respectivement un profilé de support (20) en queue d'aronde sous l'étrier de rotor (2).

4. Rotor (1) selon la revendication 1 à 3, les éléments de support (17) ayant un contact plat avec les flancs (13, 14) de la rainure (11) et présentant respectivement un col (21), au moyen duquel ils passent dans l'étrier de rotor (2), une rainure de déchargé (22) abaissée radialement dans l'étrier de rotor (2) étant prévue entre la base du col et la surface extérieure (3).

5. Rotor (1) selon la revendication 1 à 4, dans lequel le profilé de support (10) est conçu de façon qu'une première zone de bord (15) reliant la rainure (11) et la première surface active (8) se retourne perpendiculairement au tracé de la rainure derrière une seconde zone de bord (16) reliant la rainure (11) et la seconde surface active (9), de sorte que, pour deux éléments magnétiques permanents (5, 6) disposés l'un à côté de l'autre le long de leur surface de traverse, la distance entre les deux premières zones de bord (15) soit supérieure à celle entre les deux secondes zones de bord (16).

6. Rotor (1) selon l'une quelconque des revendications 1 à 5, dans lequel la première zone de bord (15) est plus longue dans la direction radiale que la seconde zone de bord (16).

7. Rotor (1) selon l'une quelconque des revendications 1 à 5, dans lequel la seconde zone de bord (16) est plus longue dans la direction radiale que la première zone de bord (15).

8. Rotor (1) selon l'une quelconque des revendications 1 à 7, dans lequel les éléments de support (17) sont conçus comme des barres de support, en particulier formées d'une pièce sur le rotor (10), qui entrent en prise dans les profilés de support (10).

9. Rotor selon l'une quelconque des revendications 1 à 8, dans lequel les éléments de support (17) s'étendent le long d'une ligne d'hélice autour d'un axe principal (18) du rotor (10).

10. Moteur électrique synchrone comprenant un rotor selon l'une quelconque des revendications 1 à 9.

11. Unité d'entraînement de véhicule, en particulier pour un véhicule électrique et/ou hybride, comprenant un moteur électrique synchrone selon la revendication 10.
